# EUROPÄISCHE PATENTANMELDUNG

(11) **EP 1 199 623 A2**
(43) Veröffentlichungstag der Anmeldung: **24.04.2002**
(21) Anmeldenummer: 01123799.7
(22) Anmeldetag: 04.10.2001
(51) Int. Cl.: G06F 1/00

(54) **Verfahren und System zur Identifikation eines Benutzers**

(30) Priorität: 17.10.2000 DE 10051461
(71) Anmelder: SIEMENS AKTIENGESELLSCHAFT, 80333 München (DE)
(72) Erfinder: Tasler, Martin, Dr., 91054 Erlangen (DE)

(57) **Zusammenfassung**

Verfahren zur Identifikation eines Benutzers, bei dem mindestens ein personenindividuelles Merkmal des Benutzers von einem zentralen Server abgefragt und von einem Eingabegerät einer benutzerseitigen Rechnereinrichtung über eine Telekommunikationsverbindung, insbesondere über das Internet an den zentralen Server übermittelt und mit gespeicherten Benutzerdaten verglichen wird, wobei das mindestens eine personenindividuelle Merkmal von dem zentralen Server aus einer Mehrzahl von in einer ersten Merkmalsgruppe umfassend den Abdruck wenigstens eines Fingers und/oder das Abbild der Iris wenigstens eines Auges und/oder eine Stimmprobe und/oder eine Unterschriftsprobe und/oder eine Abbildung wenigstens eines Teils des Benutzers und/oder den genetischen Fingerabdruck und in einer zweiten Merkmalsgruppe umfassend den Benutzernamen und/oder das Geburtsdatum und/oder eine Benutzernummer und/oder eine Geheimzahl erfassten Merkmalen nach dem Zufallsprinzip ausgewählt wird.

## Beschreibung

Die Erfindung betrifft ein Verfahren zur Identifikation eines Benutzers.

Es sind Identifikationsverfahren für Benutzer bekannt, bei denen eine Geheimzahl oder ein Passwort z.B. über das Internet abgefragt und von dem Benutzer an einen zentralen Server übermittelt werden. Diese Daten werden mit auf dem Server gespeicherten Daten verglichen. Bei Übereinstimmung kann beispielsweise ein Bezahlvorgang freigegeben werden oder das Identifikationsverfahren dient dazu, einen bestimmten geschützten Bereich im Internet für den identifizierten Benutzer frei zu geben. Die große und in den letzten Jahren ständig wachsende Zahl derartiger Systeme bringt es mit sich, dass ein Benutzer eine steigende Zahl von Geheimzahlen, PIN-Nummern oder Passwörtern auswendig lernen muss. Werden diese Daten vom Benutzer aufgeschrieben, so besteht ein großes Missbrauchsrisiko, wenn diese schriftlichen Notizen verloren gehen oder gestohlen werden, da der zentrale Serverrechner nicht feststellen kann, ob es sich bei dem Benutzer um den rechtmäßigen Besitzer der Zugangsdaten handelt.

Um derartige Probleme zu vermeiden, sind weiterhin Identifikationsverfahren bekannt, bei denen ein persönliches Merkmal, insbesondere ein körperspezifisches Merkmal eines Benutzers überprüft wird. Gebräuchlich sind insbesondere Verfahren, die ein Abbild der Iris des menschlichen Auges erstellen sowie Verfahren, bei denen ein Fingerabdruck als Identifizierungsmerkmal dient. In gleicher Weise ist vorgeschlagen worden, die Handschrift als Identifizierungsmerkmal zu benutzen, indem ein Benutzer eine Unterschriftsprobe abgibt. Allen diesen Verfahren ist gemeinsam, dass das jeweilige körperspezifische Merkmal einmal von einer autorisierten Stelle erfasst und digitalisiert werden muss und anschließend in einer Datenbank abgelegt wird. Diese Datenbank enthält zumeist weitere benutzerspezifische Datensätze, bei denen es sich je nach Einsatzzweck beispielsweise um den Namen, die Anschrift oder eine Kundennummer des Benutzers handeln kann. Ein typisches Anwendungsgebiet für derartige Identifikationsverfahren ist die Zugangskontrolle bei Gebäuden. Das überprüfte körperspezifische Merkmal wird dabei jeweils vor Ort von einer Rechnereinrichtung ausgewertet, die gegebenenfalls den Zutritt ermöglicht.

Aus EP 0 895 750 A2 ist ein Gerät bekannt, das zur Identifizierung eines Benutzers dient und bei dem eine Speichereinrichtung vorgesehen ist, in der personenindividuelle körperspezifische Merkmale wie Fingerabdrücke, Stimmmuster, Handabdrücke oder ein Abbildung der Netzhaut hinterlegt sind. Aus diesen Merkmalen wird per Zufall eines ausgewählt, das die Person, die an dem Gerät arbeiten möchte, nachzuweisen hat, wobei hierzu eine entsprechende Sensoreinrichtung z.B. zur Aufnahme eines Fingerabdrucks vorgesehen ist.

Der Erfindung liegt daher das Problem zu Grunde, ein fälschungssicheres Identifikationsverfahren anzugeben, das insbesondere auch bei Internet-Transaktionen verwendet werden kann.

Zur Lösung dieses Problems ist ein Verfahren zur Identifikation eines Benutzers vorgesehen, bei dem mindestens ein personenindividuelles Merkmal des Benutzers von einem zentralen Server abgefragt und von einem Eingabegerät einer benutzerseitigen Rechnereinrichtung über eine Telekommunikationsverbindung, insbesondere über das Internet an den zentralen Server übermittelt und mit gespeicherten Benutzerdaten verglichen wird, wobei das mindestens eine personenindividuelle Merkmal von dem zentralen Server aus einer Mehrzahl von in einer ersten Merkmalsgruppe umfassend den Abdruck wenigstens eines Fingers und/oder das Abbild der Iris wenigstens eines Auges und/oder eine Stimmprobe und/oder eine Unterschriftsprobe und/oder eine Abbildung wenigstens eines Teils des Benutzers und/oder den genetischen Fingerabdruck und in einer zweiten Merkmalsgruppe umfassend den Benutzernamen und/oder das Geburtsdatum und/oder eine Benutzernummer und/oder eine Geheimzahl erfassten Merkmalen nach dem Zufallsprinzip ausgewählt wird.

Durch die Kombination mehrerer Merkmale wird die Fälschungssicherheit beträchtlich erhöht, da es benutzerseitig nicht vorhersehbar ist, welches bzw. welche Merkmale von dem zentralen Server abgefragt und überprüft werden. Dabei ist es besonders vorteilhaft, dass der Benutzer weder Geheimzahlen noch Transaktionsnummern auswendig lernen oder bei sich tragen muss. Für die Identifikation werden vorzugsweise körperspezifische Merkmale benutzt, die der Benutzer zwangsläufig mit sich führt. Dementsprechend kann das erfindungsgemäße Identifikationsverfahren praktisch an jedem Ort durchgeführt werden, an dem ein geeignetes Eingabegerät zur Verfügung steht. Selbst wenn der Benutzer vollkommen unvorbereitet ist und keine der ansonsten erforderlichen Unterlagen, wie beispielsweise eine Scheckkarte, mit sich führt, kann er eine Transaktion vornehmen.

Das erfindungsgemäße Verfahren zur Identifikation eines Benutzers kann für verschiedenartige Transaktionen verwendet werden. Es bieten sich in erster Linie Bestellungen und Käufe über das Internet an, bei denen die Bezahlung mittels des erfindungsgemäßen Verfahrens autorisiert werden kann. In gleicher Weise kann sich der Benutzer Zugang zu persönlichen Informationen verschaffen, er kann beispielsweise seine Kontoauszüge abrufen und sich dazu durch das erfindungsgemäße Verfahren legitimieren.

Um die Missbrauchsgefahr zu verkleinern, kann es vorgesehen sein, dass mehrere personenindividuelle Merkmale nach dem Zufallsprinzip ausgewählt und abgefragt werden. Es kann beispielsweise vorgesehen sein, dass die Iris eines Auges aufgenommen und überprüft wird, gleichzeitig wird ein Fingerabdruck desselben Benutzers überprüft. Erst bei Übereinstimmung beider Merkmale wird die entsprechende Aktion, beispielsweise ein Kauf, abgewickelt.

Besonders sicher und zuverlässig sind Identifikationsverfahren, bei denen der Abdruck wenigstens eines Fingers oder das Abbild der Iris eines Auges als Merkmale dienen. In gleicher Weise lässt sich eine Stimmprobe des Benutzers oder eine Unterschriftsprobe als Prüfmerkmal verwenden, da diese für die jeweilige Person individuell sind. Ebenso kann mit einer Kamera ein Teil des Körpers oder ein Teil des Körperprofils aufgenommen und mit zuvor gespeicherten Daten verglichen werden. In der Erprobung sind auch Verfahren, bei denen der so genannte "genetische Fingerabdruck" als Identifizierungsmerkmal dient. Besonders bevorzugt werden dabei nichtinvasive Verfahren, die den Benutzer nicht beeinträchtigen. Diese körperspezifischen Merkmale sind in einer ersten Merkmalsgruppe gespeichert.

Es ist zweckmäßig, in einer zweiten Merkmalsgruppe weitere personenindividuelle Merkmale wie beispielsweise den Benutzernamen, die Anschrift, das Geburtsdatum, die Benutzer- oder Kundennummer oder eine Geheimzahl zu speichern. Der Server kann analog auch aus dieser zweiten Merkmalsgruppe wenigstens ein Merkmal auswählen und abfragen.

Bei dem erfindungsgemäßen Verfahren wird vorzugsweise wenigstens ein Merkmal aus der ersten Merkmalsgruppe mit körperspezifischen Merkmalen gewählt, die ein besonders hohes Maß an Sicherheit bieten.

In einer Weiterbildung der Erfindung ist vorgesehen, dass die Datenübertragung verschlüsselt erfolgt. In erster Linie ist es sinnvoll, die von dem Eingabegerät ermittelten Daten mit dem personenindividuellen Merkmal zu verschlüsseln, damit diese von unberechtigten Dritten nicht gelesen und genutzt werden können.

Das erfindungsgemäße Identifikationsverfahren lässt sich ebenfalls für die Erstellung einer elektronischen Signatur bei einer elektronischen Mitteilung verwenden, so dass der Empfänger dieser Mitteilung absolut sicher sein kann, dass die Mitteilung tatsächlich von dem angegebenen Absender stammt.

Die Erfindung betrifft ferner ein System zum Identifizieren eines Benutzers mit mindestens einem zentralen Server mit einer Datenbank mit personenindividuellen Merkmalen von Benutzern, mit mindestens einem externen, mit dem Server über das Internett kommunizierenden benutzerseitigen Rechnereinrichtung mit mindestens einem Eingabegerät, über welches mindestens ein personenindividuelles Merkmal von dem Server abfragbar und an diesen übermittelbar ist, wobei die personenindividuellen Merkmale eines Benutzers in einem personenspezifischen Datensatz mit einer erste Merkmalsgruppe umfassend den Abdruck wenigstens eines Fingers und/oder das Abbild der Iris wenigstens eines Auges und/oder eine Stimmprobe und/oder eine Unterschriftsprobe und/oder eine Abbildung wenigstens eines Teils des Benutzers und/oder den genetischen Fingerabdruck und mit einer zweiten Merkmalsgruppe umfassend den Benutzernamen und/oder das Geburtsdatum und/oder eine Benutzernummer und/oder eine Geheimzahl serverseitig abgelegt sind, und wobei das wenigstens eine personenindividuelle abgefragte Merkmal aus den Merkmalen beider Merkmalsgruppen nach dem Zufallsprinzip auswählbar ist.

Eine Komponente des erfindungsgemäßen Identifikationssystems kann ein herkömmlicher Personal Computer sein, der als benutzerseitige Rechnereinrichtung dient. An diesen ist mindestens ein Eingabegerät angeschlossen, bei dem es sich beispielsweise um eine Digitalkamera oder ein Mikrofon handeln kann. Die Eingabegeräte wandeln die Bilder bzw. Töne in digitale Daten um, die anschließend von dem Computer über das Internet an den zentralen Server übermittelt werden. Alternativ bzw. zusätzlich kann auch ein Eingabegerät zum Erfassen eines Fingerabdrucks oder ein Mittel zum Erfassen einer Unterschriftsprobe vorgesehen sein. In einer Weiterbildung der Erfindung ist vorgesehen, dass die benutzerseitige Rechnereinrichtung ein Eingeabegerät zum Erfassen bzw. Auswerten des genetischen Fingerabdrucks des Benutzers aufweist. Es können auch mehrere unterschiedliche Eingabegeräte an einen bestimmten benutzerseitigen Rechner angeschlossen sein. Ebenso können die Eingabegeräte mit herkömmlichen Eingabegeräten wie einem Magnetkartenleser und einer Zahlen- oder Buchstabentastatur kombiniert sein.

Bevorzugt werden Identifikationssysteme, die mehrere zentrale Server mit identischen Datenbanken aufweisen. Auf diese Weise wird eine besonders hohe Ausfallsicherheit gewährleistet. Wichtig ist in diesem Fall, dass die Datensätze der verschiedenen Server regelmäßig abgeglichen werden, so dass auf allen Servern identische Datensätze gespeichert sind.

Zur Verhütung von Missbrauch ist es vorteilhaft, wenn das System ein Mittel zur Ver- und oder Entschlüsselung von Daten umfasst. Dieses Mittel kann als Softwareprogramm ausgebildet sein, so dass die Ver- und Entschlüsselung der Daten automatisiert erfolgen kann. Diese Software kann auch Teil der Software sein, die zur Erfassung und Digitalisierung des personenindividuellen Merkmals des Benutzers dient.

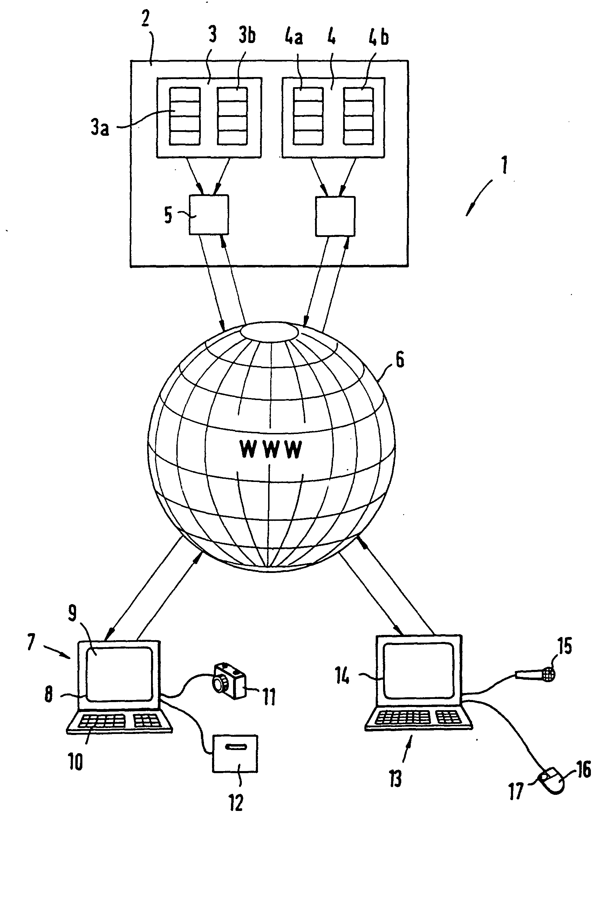

Die Erfindung wird nachfolgend unter Bezugnahme auf die Figur anhand eines besonders geeigneten Ausführungsbeispiels näher erläutert.

In der Figur sind die Komponenten des erfindungsgemäßen Systems zur Identifikation eines Benutzers schematisch dargestellt. Das System 1 besteht aus dem zentralen Server 2, bei dem es sich um ein Computersystem handelt und das eine Datenbank mit einer Vielzahl von benutzerspezifischen Datensätzen 3, 4 aufweist, von denen zwei beispielhaft dargestellt sind. Der erste Datensatz 3 enthält eine erste Merkmalsgruppe 3a mit personenindividuellen Merkmalen, zu denen ein Fingerabdruck, eine Abbildung des Kopfumrisses und eine Stimmprobe des Benutzers gehören. Für denselben Benutzer sind in einer zweiten Merkmalsgruppe 3b weitere personenindividuelle Merkmale gespeichert, bei denen es sich um den Namen und die Anschrift des Benutzers sowie um Bankkontoinformationen handelt.

Der Server 2 enthält außerdem einen Datensatz 4 mit Daten eines anderen Benutzers. Die Daten des Datensatzes 4 sind ebenfalls in die Merkmalsgruppen 4a und 4b unterteilt.

Die Datensätze der verschiedenen Benutzer weisen jeweils die gleiche Datenstruktur auf, sie werden bei neuen Benutzern einmal erfasst und auf dem Server 2 gespeichert.

Zur Identifikation desjenigen Benutzers, dem der Datensatz 3 zugeordnet ist, wählt der zentrale Server 2 durch ein Softwareprogramm mindestens eines der personenindividuellen Merkmale aus der ersten Merkmalsgruppe 3a aus und übermittelt das ausgewählte Merkmal 5 über eine Internetverbindung 6 an eine benutzerseitige Rechnereinrichtung 7, die aus einem Personal Computer 8 mit einem Bildschirm 9 und einer Eingabetastatur 10 besteht. Der Personal Computer 8 ist in bekannter Weise, beispielsweise über ein nicht dargestelltes Modem mit dem Internet 6 verbunden. An den Personal Computer 8 sind in dem dargestellten Ausführungsbeispiel eine Digitalkamera 11 und ein Magnetkartenleser 12 angeschlossen.

Nachdem der zentrale Server 2 aus der Mehrzahl von personenindividuellen Merkmalen der Merkmalsgruppe 3a wenigstens ein Merkmal 5 ausgewählt hat, sendet er an die benutzerseitige Rechnereinrichtung 7 eine Abfrage, durch die er das ausgewählte Merkmal 5 anfordert. Von dem Server 2 wird also nicht das Merkmal selbst in digitalisierter Form versendet, sondern die Rechnereinrichtung 7 wird aufgefordert, das Merkmal zu senden. Der Benutzer erhält auf dem Bildschirm 9 eine Aufforderung, ein bestimmtes Merkmal nachzuweisen. Wie in der Figur zu erkennen ist, ist die benutzerseitige Rechnereinrichtung 7 zur Aufnahme von Bilddaten mittels der Digitalkamera 11 ausgebildet. Der Benutzer kann somit aufgefordert werden, eine Abbildung seiner Kopfkontur aufnehmen zu lassen, die anschließend in digitalisierter Form von der Digitalkamera 11 über die Rechnereinrichtung 7 über das Internet 6 an den zentralen Server 2 übermittelt wird. Dieser überprüft mittels des Softwareprogramms, ob dieses Merkmal mit dem angeforderten Merkmal identisch ist. Bei Übereinstimmung erfolgt eine Rückmeldung von dem zentralen Server 2 über die Internetverbindung 6 an die Rechnereinrichtung 7, so dass die beabsichtigte Transaktion, bei der es sich um einen Bezahlungsvorgang oder eine Bestellung handeln kann, durch die Rechnereinrichtung 7 durchgeführt werden kann. Die Auswahl des jeweils abgefragten Merkmals erfolgt durch einen Zufallgenerator. Neben dem wenigstens einen personenindividuellen Merkmal kann der Server 2 ein weiteres Merkmal aus der ersten Merkmalsgruppe 3a oder der zweiten Merkmalsgruppe 3b abfragen. Es wird jedoch in jedem Fall wenigstens ein Merkmal aus der ersten Merkmalsgruppe 3a abgefragt. Bei den Merkmalen der zweiten Merkmalsgruppe 3b kann es sich beispielsweise um den Benutzernamen, aber auch um auf einer Karte, beispielsweise einer Magnet- oder Chipkarte gespeicherte Daten handeln. Zum Auslesen dieser Daten dient der ebenfalls an die Rechnereinrichtung 7 angeschlossene Magnetkartenleser 12.

Der zentrale Server 2 ist mit einer Vielzahl von externen, benutzerseitigen Rechnereinrichtungen über das Internet verbunden. In der Figur ist beispielhaft noch eine zweite Rechnereinrichtung 13 dargestellt, die ebenfalls aus einem Personal Computer 14 besteht. An den Personal Computer 14 ist ein Mikrofon 15 sowie ein Eingabegerät für die Erfassung von Fingerabdrücken, eine sogenannte "Fingerabdruckmaus" angeschlossen. Diese Fingerabdruckmaus 16 weist ein Sensorelement 17 auf, das bei aufgelegtem Finger ein Abbild des Fingerabdrucks erfasst und dieses an den Personal Computer 14 weiterleitet. Zur Identifikation desjenigen Benutzers, dem der Datensatz 4 zugeordnet ist, übermittelt der Server 2 eine Abfrage nach mindestens einem der personenindividuellen Merkmale aus den Merkmalsgruppen 4a und 4b über die Internetverbindung 6 an die Rechnereinrichtung 13, die das Merkmal in der beschriebenen Weise erfasst, digitalisiert und an den Server 2 übermittelt. Zur Sicherheit werden sämtliche über die Internetverbindung 6 übertragenen Daten verschlüsselt.

Die einzelnen benutzerseitigen Rechnereinrichtungen 7, 13 sind vollkommen unabhängig voneinander und können sehr weit entfernt voneinander aufgestellt sein. Die jeweils angeschlossenen Eingabegeräte (Digitalkamera 11, Magnetkartenleser 12, Mikrofon 15, Maus 16) können in unterschiedlichen Kombinationen vorhanden sein.

## Patentansprüche

1. Verfahren zur Identifikation eines Benutzers, bei dem mindestens ein personenindividuelles Merkmal des Benutzers von einem zentralen Server abgefragt und von einem Eingabegerät einer benutzerseitigen Rechnereinrichtung über eine Telekommunikationsverbindung, insbesondere über das Internet an den zentralen Server übermittelt und mit gespeicherten Benutzerdaten verglichen wird, wobei das mindestens eine personenindividuelle Merkmal von dem zentralen Server aus einer Mehrzahl von in einer ersten Merkmalsgruppe umfassend den Abdruck wenigstens eines Fingers und/oder das Abbild der Iris wenigstens eines Auges und/oder eine Stimmprobe und/oder eine Unterschriftsprobe und/oder eine Abbildung wenigstens eines Teils des Benutzers und/oder den genetischen Fingerabdruck und in einer zweiten Merkmalsgruppe umfassend den Benutzernamen und/oder das Geburtsdatum und/oder eine Benutzernummer und/oder eine Geheimzahl erfassten Merkmalen nach dem Zufallsprinzip ausgewählt wird.

2. Verfahren nach Anspruch 1, **dadurch gekennzeichnet, dass** mehrere personenindividuelle Merkmale nach dem Zufallsprinzip ausgewählt und abgefragt werden.

3. Verfahren nach Anspruch 2, **dadurch gekennzeichnet, dass** in jedem Fall wenigstens ein Merkmal aus der ersten Merkmalsgruppe gewählt wird.

4. Verfahrne nach einem der vorangehenden Ansprüche, **dadurch gekennzeichnet, dass** die Datenübertragung verschlüsselt erfolgt.

5. System zum Identifizieren eines Benutzers mit mindestens einem zentralen Server mit einer Datenbank mit personenindividuellen Merkmalen von Benutzern, mit mindestens einem externen, mit dem Server über das Internett kommunizierenden benutzerseitigen Rechnereinrichtung mit mindestens einem Eingabegerät, über welches mindestens ein personenindividuelles Merkmal von dem Server abfragbar und an diesen übermittelbar ist, wobei die personenindividuellen Merkmale eines Benutzers in einem personenspezifischen Datensatz (3, 4) mit einer erste Merkmalsgruppe umfassend den Abdruck wenigstens eines Fingers und/oder das Abbild der Iris wenigstens eines Auges und/oder eine Stimmprobe und/oder eine Unterschriftsprobe und/oder eine Abbildung wenigstens eines Teils des Benutzers und/oder den genetischen Fingerabdruck und mit einer zweiten Merkmalsgruppe umfassend den Benutzernamen und/oder das Geburtsdatum und/oder eine Benutzernummer und/oder eine Geheimzahl serverseitig abgelegt sind, und wobei das wenigstens eine personenindividuelle abgefragte Merkmal (5) aus den Merkmalen beider Datensätze Merkmalsgruppen (3a, 3b, 4a, 4b) nach dem Zufallsprinzip auswählbar ist.

6. System nach Anspruch 5, **dadurch gekennzeichnet, dass** das Eingabegerät der benutzerseitigen Rechnereinrichtung (7, 13) wenigstens eine Kamera (11) und/oder wenigstens ein Mikrofon und/oder wenigstens ein Mittel (17) zum Erfassen eines Fingerabdrucks umfasst.

7. System nach Anspruch 5 oder 6, **dadurch gekennzeichnet, dass** mehrere zentrale Server mit identischen Datenbanken vorgesehen sind.

8. System nach einem der Ansprüche 5 bis 7, **dadurch gekennzeichnet, dass** der Server (2) und/oder die benutzerseitige Rechnereinrichtung (7, 13) ein Mittel zur Ver- und Entschlüsselung von Daten umfassen.
